# EUROPÄISCHE PATENTSCHRIFT

(11) **EP 1 646 156 B1**
(45) Veröffentlichungstag und Bekanntmachung des Hinweises auf die Patenterteilung: **02.07.2008**
(21) Anmeldenummer: 05027848.0
(22) Anmeldetag: 22.09.2003
(51) Int. Cl.: H04B 5/00, H04B 13/00

(54) **Nachrichtenübertragungssystem unter Verwendung von elektrischem Nahfeld**
Information transmission system using electrical near field
Système de transmission de messages reposant sur l'utilisation d'un champ électrique proche

(30) Priorität: 11.10.2002 DE 10247526
(43) Veröffentlichungstag der Anmeldung: 12.04.2006
(62) Teilanmeldung aus: 03750367.9
(73) Patentinhaber: SIEMENS AKTIENGESELLSCHAFT, 80333 München (DE)
(72) Erfinder: Hraby, Günther, 3021 Pressbaum (AT); Renner, Alexander, Dr., 1120 Wien (AT); Schindelarz, Georg, 1050 Wien (AT); Veith, Peter, Dr., 811 04 Bratislava (SK)

(56) Entgegenhaltungen:
- WO-A-94/24777
- DE-A- 19 939 941

## Beschreibung

Die Erfindung betrifft ein Nachrichtübertragungssystem, mit dem Nachrichten von einem Sender zu einem Empfänger übertragen werden. Sie betrifft auch einen Sender und einen Empfänger für dieses Nachrichtübertragungssystem sowie eine Verwendung des Nachrichtenübertragungssystems in einem Bussystem eines Gebäudes.

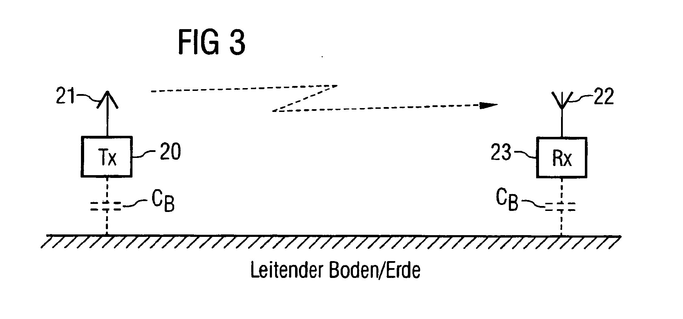

Bei herkömmlichen Nachrichtenübertragungssystemen, bei denen Signale per Funk übertragen werden, ist ein Funksender 20 (FIG 3) vorhanden, der eine Antenne 21 aufweist, über die elektromagnetische Wellen (hier als gestrichelter, blitzförmiger Pfeil dargestellt) abgestrahlt werden. Eine Antenne 22 eines Funkempfängers 23 empfängt die elektromagnetische Wellen und extrahiert daraus die übertragenen Nachrichten.

Die eigentliche Nachrichtenübertragung findet dabei durch elektromagnetische Strahlung im Fernfeld statt. Hierzu muss jede Antenne 21, 22 auf die Frequenz der abgestrahlten elektromagnetischen Felder angepasst sein. Ansonsten wird die Qualität der Nachrichtenübertragung stark verschlechtert.

Solch eine Funkübertragung im Hochfrequenzbereich hat den Nachteil, dass ein hoher Material- und Komponentenaufwand erforderlich ist, wie beispielsweise Antennen 21, 22 , HF- Sende- und Empfangsteil, Steuerteil, Basisband, usw. Für eine solche Funkübertragung wird sehr viel Strom verbraucht, um u.a. die Verluste auf der Übertragungsstrecke zu kompensieren. Zudem werden elektromagnetische Wellen auch in eine unerwünschte Umgebung gesendet, da ihre Amplitude nur langsam abklingt. Dies führt dazu, dass die Nachrichten, die übertragen werden, leicht abgehört oder gestört werden können. Außerdem entstehen störende Interferenzen mit anderen Systemen, die einerseits zu einem verschlechterten Empfang führen und andererseits andere Systeme ungünstig beeinflussen können. Ferner ist die Anzahl der Teilnehmer eines Funk-Übertragungskanals begrenzt.

Nachrichten können auch bekannterweise im Hochfrequenzbereich leitungsgebunden übertragen werden. Hierzu wird eine Leitung mit Hin- und Rückleiter mit einem Wechselstrom gespeist, wobei die Leitungsinduktivität und die Leitungskapazität den Energietransport beeinflussen. Die Ausbreitungsgeschwindigkeit ist dabei begrenzt. Je höher die übertragene Frequenz ist, desto aufwendiger und teurer müssen die Leitungen ausgebildet sein.

Der Nachteil bei dieser Nachrichtübertragung ist es, dass Hin- und Rückleiter benötigt werden, die von ihrer Umgebung elektrisch isoliert sind. Ein Anzapfen der Leitungen führt zu einer verschlechterten Nachrichtenübertragung. Daher müssen die Auskoppelstellen speziell ausgebildet sein. Die Hin- und Rückleiter müssen mit ihrer Isolierung an die Umgebungsbedingungen angepasst sein, damit keine Kurzschlüsse erzeugt werden.

Aus der WO 94/24777 ist ein Nachrichtenübertragungssystem bekannt, bei dem eine Nachrichtenübertragung über einen ohnehin in einem Gebäude vorhandenen Infrastrukturkörper, der ein von Erde elektrisch isoliertes und elektrisch leitendes Leiterelement aufweist, stattfindet.

Die DE 199 39 941 zeigt ein Nachrichtenübertragungssystem, bei dem eine unsymmetrische Datenübertragung über eine Pipeline stattfindet.

Die Aufgabe der Erfindung ist es, ein Nachrichtenübertragungssystem mit einem Sender und einem Empfänger zu schaffen, dass einfach aufgebaut ist, eine zuverlässige Nachrichtenübertragung unter Nutzung vorhandener Infrastruktur gewährleistet und universell eingesetzt werden kann.

Diese Aufgabe wird durch ein Nachrichtenübertragungssystem mit den Merkmalen von Patentanspruch 1, durch einen Sender mit den Merkmalen von Patentanspruch 9 und durch einen Empfänger mit den Merkmalen von Patentanspruch 10 gelöst.

Dabei weist das Nachtrichtübertragungssystem einen Sender auf, mit dessen Koppelelement 2 im Wesentlichen ein elektrisches Nahfeld ausgesendet wird. Dieses Feld wird in einen Gebäude-Infrastrukturkörper eingekoppelt, der ein von Erde elektrisch isoliertes und elektrisch leitendes unsymmetrisches Element aufweist, in dem dann ein leitungsgebundener Leitungsstrom geführt wird. Der Leitungsstrom kann durch einen Empfänger mit einem Koppelelement 2 ausgekoppelt werden. Der Stromkreis wird geschlossen über Verschiebeströme, die über Auskoppelkapazitäten und Bodenkapazitäten von Sender und Empfänger fließen, sowie über Erde oder den leitenden Boden zurück fließen.

Dies hat den Vorteil, dass aufgrund der kapazitiven Einkopplung in den Infrastrukturkörper die Verluste eines strahlenden Systems vermieden werden, und somit ein sehr geringer Stromverbrauch in Sender und Empfänger vorliegt. Es werden keine sich weit ausbreitenden, unerwünschten Streufelder produziert, da die Einkopplung vom Sender in den Infrastrukturkörper durch ein elektrisches Nahfeld mit einer nur geringen Reichweite vonstatten geht. Als Infrastrukturkörper können alle ohnehin vorhandenen Körper eines Gebäudes verwendet werden, die auch zumindest teilweise elektrisch leitende Elemente aufweisen. Die Hauptverluste entstehen lediglich in Kopplungskapazitäten zwischen Sender/Empfänger und Erde. Geringe Verluste entstehen zudem noch zwischen Kopplungselementen und Infrastrukturkörper, falls die Abstände dazwischen zu groß werden sollten.

Weitere Vorteile des erfindungsgemäßen Nachrichtübertragungssystems sind die Verlagerungen der Übertragungsstrecke vom Strahlungsfernfeld in ein quasistationäres Nahfeld mit einem hochfrequenten Wechselstrom. Dadurch wird grundsätzlich eine Ausstrahlung der hochfrequenten Energie in die Umgebung unterbunden, welche ansonsten zunehmend Störungen in fremden und eigenen Systemen zu Folge haben könnten. Eine Zulassung bei Funkbehörden ist somit nicht mehr notwendig, da die Störreichweite und Amplituden nur ganz gering gehalten werden können. Die Verluste auf der Übertragungsstrecke werden reduziert und der Stromverbrauch kann minimiert werden. Es werden keine Antennen benötigt, da das auszusendende elektromagnetische Feld entweder galvanisch oder kapazitiv in den Infrastrukturkörper eingekoppelt wird. Somit kann das Nachrichtenübertragungssystem flexibel und mobil eingesetzt werden. Mit dem Wegfall der Antennen wird die elektronische Ausrüstung einfacher, es wird keine für die Antenne spezielle Positionierung benötigt, wobei der Sensor, ein Steuerteil und eine Übertragungseinheit auf einem Halbleiterchip ausgeführt werden können.

Eine Signalübertragung im quasistationären elektrischen Feld benötigt keine Taktgewinnung auf der Empfängerseite, denn der Systemtakt kann einheitlich in das Übertragungsmedium (Infrastrukturkörper mit seinem Leiterelement) eingespeist werden. Bei diesem Nachrichtübertragungssystem können die Methoden der Funktechnik, wie Trägeraufbereitung, Modulation, Multiplexverfahren, Empfang und Demodulation uneingeschränkt angewendet werden.

Vorteilhafte Ausgestaltungen der Erfindung werden durch die Merkmale der Unteransprüche wiedergegeben. Besonders vorteilhaft ist es dabei, ohnehin vorhandene Infrastrukturkörper zum Übertagen der Nachrichten zu verwenden. Das Medium, d.h. das leitende Element des Infrastrukturkörpers, braucht dazu nicht besonders ausgestaltet zu sein. Es genügt, wenn das leitende Element zeitinvariant elektrisch leitfähig ist, damit keine Verschlechterung der Übertragung eintritt. Vorteilhaft ist es zudem, wenn der Infrastrukturköper eine elektrische Impedanz gegenüber Erdpotential aufweist, wodurch dann eine gute Rückleitung über Erde bei der Nachrichtenübertragung gebildet wird. Die vorteilhafte Nutzung des Frequenzbandes im Bereich zwischen 5 MHz und 50 MHz führt dazu, dass die elektronische Schaltung in stromsparender CMOS-Technologie ausgeführt werden kann.

Besonders vorteilhaft kann dieses Nachrichtenübertragungssystem bei einem Bussystem eines Gebäudes verwendet werden. Als Infrastrukturkörper wird dabei ein Heizkörpersystem verwendet.

Ausführungsbeispiele der Erfindung werden anhand der schematischen Zeichnung näher erläutert. Es zeigen:
- FIG 1: ein Blockschaltbild eines erfindungsgemäßen Nachrichtenübertragungssystems,
- FIG 2: ein Blockschaltbild eines Senders/Empfängers des Nachrichtenübertragungssystems nach FIG 1, und
- FIG 3: ein Blockschaltbild eines herkömmlichen Funk-Nachrichtenübertragungssystems.

Ein erfindungsgemäßes Nachrichtenübertragungssystem weist einen Sender 1 mit einem Sendeelement Tx auf, der über ein Koppelelement 2 ein elektrisches Nahfeld als Streufeld erzeugt. Mit Hilfe des elektrischen Feldes soll ein Signalstrom in einem Infrastrukturkörper 3 induziert und eine Nachricht (Daten, Informationen, Signale) übertragen werden. Auf der Empfangsseite ist ein Empfänger 4, der ebenfalls ein Koppelelement 5 aufweist, zum "Empfangen" des vom Signalstrom induzierten, elektrischen Feldes.

Zwischen Sender 1 und Empfänger 4 ist der Infrastrukturkörper 3 angeordnet, der ein oder mehrere von Erde (Erdpotenzial) elektrisch isolierte und elektrisch leitende Elemente 6 (als Leiterelement oder elektrischer Leiter bezeichnet) aufweist. Sender 1 und Empfänger 4 weisen jeweils eine Kapazität gegen Erde auf (im Folgenden als Bodenkapazität C_{B} bezeichnet).

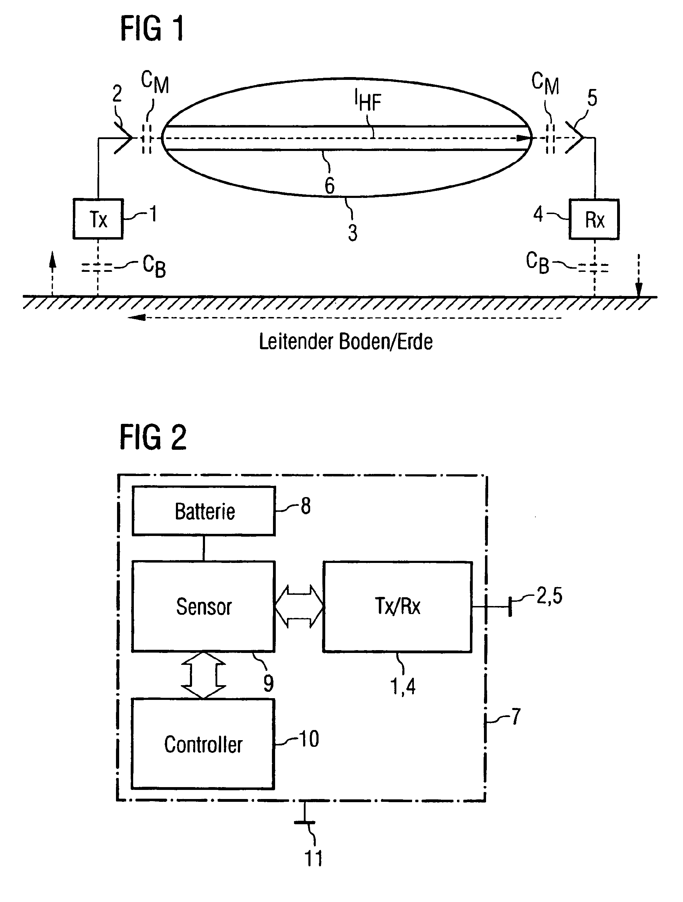

Zum Übertragen von Nachrichten erzeugt der Sender 1 über sein Koppelelement 2 ein quasistationäres elektrisches Nahfeld, das in das elektrische Leiterelement des Infrastrukturkörpers 3 eingestreut wird. Der freie Abstand zwischen dem Koppelelement 2 und dem Leiterelement 6 wird durch einen Verschiebungsstrom überbrückt, der über die "virtuelle" Kapazität C_{M} (gestrichelt in FIG 1 dargestellt) zwischen Koppelelement 2 und Leiterelement 6 fließt. In dem elektrischen Leiterelement 6 fließt ein hochfrequenter Leitungsstrom I_{HF} (gestrichelter Pfeil im Leiterelement 6 in FIG 1), der im Bereich des Koppelelements 5 des Empfängers 4 ein quasistationäres elektrisches Nahfeld erzeugt, das in das Koppelelement 2 gestreut wird, wodurch die übertragenen Nachrichten empfangen werden.

Der Stromkreis von Sender 1 zum Empfänger 4 und zurück ist senderseitig über die Koppelkapazität C_{M} zwischen Koppelelement 2 und Leiterelement 6 des Infrastrukturkörpers 3, durch das elektrische Leiterelement 6, empfangsseitig über die Koppelkapazität C_{M} zwischen Leiterelement 6 und Koppelelement 5 des Empfängers 4, über die Koppelkapazität C_{B} zwischen Empfänger 4 und Erde, und zurück über Erde als elektrischer Leiter und die Koppelkapazität oder Bodenkapazität C_{B} zwischen Erde und Sender 1 geschlossen. Dabei fließt über die jeweiligen Koppelkapazitäten C_{B}, C_{M} der aus der Funkübertragung bekannte Verschiebungsstrom und im Leiterelement 6 des Infrastrukturkörpers 3 sowie der Erde ein Leitungsstrom.

Als Infrastrukturkörper 3 mit seinem elektrischen Leiterelement 6 können ohnehin vorhandene Infrastrukturkörper 3, wie beispielsweise die Heizungsinstallation in einem Gebäude usw. verwendet werden.

Durch das quasistationäre elektrische Nahfeld zwischen Koppelelement 2 und Infrastrukturkörper 3, genügt eine relativ kleine Leistung, um über das Nahfeld eine entsprechende Wechselspannung in dem Leiterelement 6 zu induzieren. Das Übertragungssystem ist energiesparend und weist somit nur geringe Verluste auf. Die Reichweite des Nahfeldes ist allerdings sehr gering, so dass die Koppelelemente 2, 5 jeweils in der Nähe des Infrastrukturkörpers 3 mit seinem elektrischen Leiterelement 6 angeordnet sein müssen. Dies hat hingegen den Vorteil, dass die übertragenen Nachrichten nur schwer aus der Ferne abgehört oder manipuliert werden können, da eine Feldausbreitung im Fernfeld nicht vorhanden ist und Streufelder sehr schnell in ihrer Amplitude abklingen (proportional zu 1/r² oder 1/r³).

Die Trägerfrequenz kann so gewählt werden, dass die Impedanzen der Bodenkapazitäten C_{B} und der Kopplungskapazitäten C_{M} zwischen Koppelelementen 2, 5 und Infrastrukturkörper 3 sehr niederohmig sind, wobei der dadurch erfolgte Spannungsabfall und infolgedessen die Verluste gering sind. Die Kopplungskapazitäten C_{M} zwischen den jeweiligen Koppelelementen 2,5 und dem Infrastrukturkörper 3 hängen darüber hinaus von den gegenseitigen Abständen und Abmessungen bei der jeweiligen Anwendung ab (kann analog wie die Kapazität eines Plattenkondensators berechnet werden).

Das elektrische Leiterelement 6 des Infrastrukturkörpers 3 sollte aus einem weitgehend homogenen Material bestehen und seine Leitfähigkeit sollte zeitinvariant sein (d.h. zeitlich nicht ändern). Somit liegt dann ein Übertragungsmedium für einen hochfrequenten Wechselstrom vor, das ein kompliziertes RCL-Netzwerk mit reproduzierbaren Verhältnissen darstellt. Die Verluste sind dennoch wesentlich geringer als in einem Hochfrequenzfunkkanal. Das elektrische Leiterelement 6 muss nicht einstückig sein. Kurze Abstände (nicht leitende Abschnitte) zwischen leitendem Material stellen wiederum Kopplungskapazitäten dar, die gut durch einen Verschiebungsstrom überbrückt werden können.

Der schematische Aufbau eines Senders 1 oder Empfängers 4 ist in der FIG 2 dargestellt. Dabei weist der jeweilige Sender 1 oder Empfänger 4 ein Gehäuse 7 auf, in dem ein Sendeelement Tx bzw. ein Empfangselement Rx angeordnet ist. Sender 1 und Empfänger 4 weisen jeweils eigenständige Energiequellen 8 auf, mögliche Sensoren 9 zum Messen von physikalischen Größen, eine Steuereinheit (Controller) 10 sowie die jeweiligen Koppelelemente 2, 5 und Bodenkoppelelemente 11.

Mit dem Sender 1 bzw. Empfänger 4 ist jeweils ein Koppelelement 2, 5 elektrisch verbunden, das eine kapazitive Elektrode darstellt. Es kann auch ein Kondensator als Koppelelement 2, 5 verwendet werden. Durch das Koppelelement 2, 5 wird ein im Wesentlichen elektrisches Nahfeld (Streufeld) erzeugt und im Nahbereich abgestrahlt. Das Koppelelement 2, 5 kann auch durch eine galvanische Verbindung ersetzt werden. Dann fließt der hochfrequente Leitungsstrom vom Sender 1 über ein nicht dargestelltes Anpassungsnetzwerk und über die galvanische Verbindung unmittelbar zum Leiterelement 6 des Infrastrukturkörpers 3.

Zwischen Sender 1 und galvanischer Verbindung ist dann ein Anpassungsnetzwerk, das beispielsweise zumindest einen konzentrierten Kondensator aufweisen kann, über den das gestreute Nahfeld in die galvanische Verbindung eingekoppelt wird.

Sender 1 bzw. Empfänger 4 weisen jeweils eine Koppelkapazität gegen Erde (als Bodenkapazität C_{B} bezeichnet) auf, die durch eine Elektrode (auch als Bodenkoppelelement 11 bezeichnet) des Senders 1 und dem leitenden Boden als zweite Elektrode gebildet wird. Zudem weist jeder Sender 1 und jeder Empfänger 4 jeweils zumindest ein Koppelelement 2, 5 (auch als Mediumkoppler bezeichnet) auf, das die elektrische Kopplung zum elektrischen Leiterelement 6 des Infrastrukturkörpers 3 bewerkstelligt.

Mit Hilfe der Steuereinheit 10 können Sensorsignale oder vom Sensor erhaltene Daten auf einen hochfrequenten Träger als zu übertragende Daten aufmoduliert bzw. demoduliert werden. Bei solchen Sendern 1 und Empfängern 4 können herkömmliche Techniken der Nachrichtenübertragung, wie Modulation und Demodulation, die dem Fachmann hinreichend bekannt sind, verwendet werden.

Da in dem Leiterelement 6 des Infrastrukturkörpers 3 ein hochfrequenter Leitungsstrom (I_{HF}) fließt, ist die Dämpfung entlang des Leiterelements 6 wesentlich geringer als bei einer vergleichbaren Funkübertragung, bei der ein stärker verlustbehafteter Verschiebungsstrom fließt. Somit genügt es, wenn das elektrische Feld mit geringerer Energie erzeugt wird, um gegenüber der gewöhnlichen Funktechnik Energie einzusparen, um dennoch relativ große Reichweiten für die Übertragung zu erhalten.

Auch wenn über den Infrastrukturkörper 3 nur in einer Richtung Daten übertragen werden, so kann dennoch eine einheitliche Synchronisation - wie bei Zweiwegsystemen - stattfinden, indem der Systemtakt in das Übertragungsmedium eingespeist wird. Aus diesem Grunde wird auch nur ein einziger elektrisches Leiterelement 6, das heißt eine einzige elektrische Verbindung zwischen den Koppelelementen 2, 5 benötigt. Man spricht dann von einem unsymmetrischen elektrischen Leiterelement 6, das als Rückleiter das Erdpotential ausnützt. Die Energieeinspeisung in den Infrastrukturkörper 3 geschieht dann eben auch unsymmetrisch.

Die Nachrichtenübertragung kann dabei - ebenso wie bei der konventionellen Datenübertragung - auch bidirektional vonstatten gehen. Auch eine parallele Mehrfachübertragung, wie aus der Nachrichtentechnik bekannt, kann eingesetzt werden.

Die fließenden HF-Ströme (Leitungsstrom I_{HF} und Verschiebungsstrom) konzentrieren sich im Wesentlichen auf die leitenden Teile und wirken sich somit nicht auf andere elektrische Einheiten aus. Ein Abhören der Nachrichten ist ebenfalls erschwert, da sich Streufelder schon nach kurzer Distanz nicht mehr auswirken.

Typischerweise sollten zur Übertragung der Nachrichten bei solchen Nachrichtenübertragungssystemen Trägerfrequenzen zwischen 5 MHz und 50 MHz verwendet werden. Selbstverständlich können auch - abhängig von der Verwendung und den geometrischen Abmessungen - andere Frequenzen verwendet werden.

Weitere Verwendungsmöglichkeiten für das Nachrichtenübertragungssystem sind beispielsweise die drahtlose Signalübertragung in einem Konferenzzimmer unter Benutzung eines Besprechungstisches, der ein metallenes Gestell aufweist, über das die Leitungsströme fließen, oder die Signalübertragung über beispielsweise ein Heizkörpersystem in einem Gebäude.

Mit dem Nachrichtenübertragungssystem können auch Bussysteme ersetzt werden. Es brauchen also keine separaten Busleitungen verlegt zu werden, sondern es kann die vorhandene Infrastruktur verwendet werden.

Das Nachrichtenübertragungssystem kann gut in der Messtechnik verwendet werden, und zwar bei solchen Anwendungen, bei denen extreme Umweltbedingungen existieren, die einer Funkverbindung oder der leitungsgebundenen Übertragung abträglich sind. So kann das Nachrichtenübertragungssystem beispielsweise bei hohen Temperaturen, bei starken Störfeldern, bei hohen Drücken, in aggressiver Atmosphäre, usw. eingesetzt werden, falls ein geeignetes Übertragungsmedium ohnehin vorhanden ist.

Der Infrastrukturkörper 3 muss elektrisch leitende Teile (Leiterelemente 6) aufweisen, über die der Leitungsstrom I_{HF} fließen kann. Der Abstand zwischen den Koppelelementen 2, 5 und dem elektrisch leitenden Medium (Leiterelemente 6) darf nicht zu groß sein, damit noch ein genügend großes, elektrische Feld in den Leiterelement 6 eingestreut wird. Das Leiterelement 6 sollte aus einem weitgehend homogenen Material hergestellt sein, das zeitinvariant elektrisch leitfähig ist. Der menschliche Körper ist hierfür nur ungenügend geeignet, da er einerseits einen hohen "Eingangswiderstand" (Hautwiderstand) und andererseits eine zeitvariante und nicht homogene Leitfähigkeit, d.h. ein abhängig von vielen Bedingungen abhängige Leitfähigkeit aufweist, die auch nicht unbedingt reproduzierbare Ergebnisse liefert. Zudem ist der menschliche Körper nicht gut genug elektrisch kontaktierbar. Insofern wird der Infrastrukturkörper 3 als alternatives Übertragungsmedium genutzt.

Sender 1 und Empfänger 4 können in einem Halbleiterchip integriert sein. Da keine ausgedehnte und auf die Trägerfrequenz abgestimmte Antenne benötigt wird, können Sender 1 und Empfänger 4 bei Anwendungen mit beengten Verhältnissen, selbst in abgeschirmten Bereichen eingesetzt werden. Der Sender 1 kann zudem verschiedene (Mikro-)Sensoren 9 sowie Steuerprozessoren (Steuereinheiten 10) aufweisen und somit unmittelbarer am Ort angeordnet werden können, an dem die interessierende physikalische Größe vorliegt. Dies hat den Vorteil, dass einerseits die physikalische Größe genauer und vor Ort gemessen werden kann und andererseits ein kurzer Weg ohne störenden Einfluss zwischen Sensor 9 und Sender 1 besteht.

EMV-Probleme, wie sie bei einem Funksystem vorhanden sind, hat das erfindungsgemäße Nachrichtenübertragungssystem nicht, da die Streufelder nach außen nur eine geringe Reichweite haben (Nahfeld klingt mit 1/r² oder höheren Potenzen von r) im Gegensatz zum Fernfeld ab, das mit 1/r abklingt.

Durch die unsymmetrische Einspeisung und Übertragung wird Material gespart. Die "Übertragungsleitung", d.h. Leiterelement 6 braucht nicht besonders ausgelegt zu werden, sondern ist ohnehin als Teil des Infrastrukturkörpers 3 vorhanden.

## Patentansprüche

1. Nachrichtenübertragungssystem mit
- einem Sender (1), der eine Koppelkapazität (C_{B}) gegen Erde und zumindest ein Koppelelement (2) aufweist, über das im Wesentlichen ein elektrisches Nahfeld ausgestreut wird,
- einem ohnehin in einem Gebäude vorhandenen Infrastrukturkörper (3), der ein von Erde elektrisch isoliertes und elektrisch leitendes unsymmetrisches Leiterelement (6) aufweist, in dem durch Einkoppeln des elektrischen Nahfelds ein Leitungsstrom I_{HF} induziert wird, wobei das unsymmetrische Leiterelement als Rückleiter zur Nachrichtenübertragung das Erdpotenzial ausnutzt, und
- einem Empfänger (4), der eine Koppelkapazität (C_{B}) gegen Erde und zumindest ein Koppelelement (5) aufweist, durch das ein durch den Leitungsstrom I_{HF} erzeugtes elektrisches Nahfeld ausgekoppelt wird.

2. Nachrichtenübertragungssystem nach Anspruch 1, **dadurch gekennzeichnet, dass** das elektrische Nahfeld kapazitiv in das Leiterelement (6) eingekoppelt und von diesem ausgekoppelt wird.

3. Nachrichtenübertragungssystem nach Anspruch 1, **dadurch gekennzeichnet, dass** das elektrische Nahfeld kapazitiv in das Leiterelement (6) eingekoppelt und von diesem galvanisch ausgekoppelt wird

4. Nachrichtenübertragungssystem nach Anspruch 1, **dadurch gekennzeichnet, dass** das elektrische Nahfeld galvanisch in das Leiterelement (6) eingekoppelt und von diesem kapazitiv ausgekoppelt wird

5. Nachrichtenübertragungssystem nach einem der vorhergehenden Ansprüche, **dadurch gekennzeichnet, dass** das Leiterelement (6) aus einem weitgehend homogenen Material besteht und zeitinvariant elektrisch leitfähig ist.

6. Nachrichtenübertragungssystem nach einem der vorhergehenden Ansprüche, **dadurch gekennzeichnet, dass** das Leiterelement (6) eine elektrische Impedanz gegenüber Erdpotenzial aufweist.

7. Nachrichtenübertragungssystem nach einem der vorhergehenden Ansprüche, **dadurch gekennzeichnet, dass** das elektrische Nahfeld mit einer zu übertragenden Nachricht moduliert ist.

8. Nachrichtenübertragungssystem nach Anspruch 7, **dadurch gekennzeichnet, dass** die Trägerfrequenz etwa zwischen 5 MHz und 50 MHz liegt.

9. Sender zum Aussenden von Nachrichten, der zumindest eine Energieversorgung (8), einen Modulator (10), eine Koppelkapazität (C_{B}) gegen Erde und ein Koppelelement (2) aufweist, durch das die zu übertragende Nachricht durch ein im Wesentlichen elektrisches Nahfeld in ein unsymmetrisches elektrisches Leiterelement (6), das als Rückleiter zur Nachrichtenübertragung das Erdpotenzial ausnutzt, eingekoppelt wird.

10. Empfänger zum Empfangen von Nachrichten, der eine Energieversorgung (8), einen Demodulator (10), eine Koppelkapazität (C_{B}) gegen Erde und zumindest ein Koppelelement (5) aufweist, durch das die über ein unsymmetrisches elektrisches Leiterelement (6), das als Rückleiter zur Nachrichtenübertragung das Erdpotenzial ausnutzt, übertragende Nachricht durch ein im Wesentlichen elektrisches Nahfeld aus dem Leiterelement (6) ausgekoppelt wird.

11. Verwendung des Nachrichtenübertragungssystems nach Anspruch 1 bei einem Bussystem eines Gebäudes, **dadurch gekennzeichnet, dass** das unsymmetrische Leiterelement ein Teil eines Heizkörpersystems ist.

## Claims

1. Information transmission system having
- a transmitter (1) comprising a coupling capacitor (C*_{B}*) to ground and at least one coupling element (2), via which essentially an electric near field is emitted,
- an infrastructure body (3) already existing in a building, comprising an electrically conducting non-symmetrical conductor element (6) that is electrically insulated from ground, into which conductor element (6) a line current I*_{HF}* is induced by means of injecting the electric near field, with the non-symmetrical conductor element using the ground potential as a return line for information transmission, and
- a receiver (4) comprising a coupling capacitor (C*_{B}*) to ground and at least one coupling element (5), by means of which an electric near field generated by the line current I*_{HF}* is decoupled.

2. Information transmission system according to claim 1, **characterized in that** the electric near field is capacitively coupled into the conductor element (6) and decoupled therefrom.

3. Information transmission system according to claim 1, **characterized in that** the electric near field is capacitively coupled into the conductor element (6) and is electrically decoupled therefrom.

4. Information transmission system according to claim 1, **characterized in that** the electric near field is electrically coupled into the conductor element (6) and is capacitively decoupled therefrom.

5. Information transmission system according to one of the preceding claims, **characterized in that** the conductor element (6) is a largely homogenous material and is electrically conductive in a time-invariant manner.

6. Information transmission system according to one of the preceding claims, **characterized in that** the conductor element (6) has an electric impedance to ground potential

7. Information transmission system according to one of the preceding claims, **characterized in that** the electric near field is modulated with information to be transmitted.

8. Information transmission system according to claim 7, **characterized in that** the carrier frequency lies approximately between 5 MHz and 50 MHz.

9. Transmitter for transmitting information comprising at least a power supply (8), a modulator (10) and a coupling capacitor (C*_{B}*) to ground and a coupling element (2), by means of which the information to be transmitted is coupled into a non-symmetrical electric conductor element (6) by an essentially electric near field, said conductor element (6) using the ground potential as a return conductor for transmitting messages.

10. A receiver for receiving information comprising a power supply (8), a demodulator (10), a coupling capacitor (C*_{B}*) to ground and at least one coupling element (5), by means of which the information transmitted via a non-symmetrical electric conductor element (6), which uses the ground potential as a return conductor for transmitting messages, is decoupled from the conductor element (6) by an essentially electric near field.

11. Use of the information transmission system according to claim 1 in a bus system of a building, **characterized in that** the non-symmetrical conductor element is part of a heating element system.

## Revendications

1. Système de transmission de messages comprenant
- un émetteur (1) qui comporte une capacité de couplage (C_{B}) à la terre et au moins un élément de couplage (2) via lequel un champ électrique proche est dispersé pour l'essentiel,
- un corps d'infrastructure (3) de toute manière déjà présent dans un bâtiment, lequel comporte un élément conducteur (6) non symétrique, isolé électriquement de la terre et électriquement conducteur, dans lequel un courant de conduction I_{HF} est induit par couplage du champ électrique proche, l'élément conducteur non symétrique utilisant le potentiel de terre comme conducteur de retour pour la transmission de messages et
- un récepteur (4) qui comporte une capacité de couplage (C_{B}) à la terre et au moins un élément de couplage (5) par lequel un champ électrique proche généré par le courant de conduction I_{HF} est découplé.

2. Système de transmission de messages selon la revendication 1, **caractérisé en ce que** le champ électrique proche est couplé dans l'élément conducteur (6), et découplé de celui-ci, de manière capacitive.

3. Système de transmission de messages selon la revendication 1, **caractérisé en ce que** le champ électrique proche est couplé dans l'élément conducteur (6) de manière capacitive et est découplé de celui-ci de manière galvanique.

4. Système de transmission de messages selon la revendication 1, **caractérisé en ce que** le champ électrique proche est couplé dans l'élément conducteur (6) de manière galvanique et est découplé de celui-ci de manière capacitive.

5. Système de transmission de messages selon l'une des revendications précédentes, **caractérisé en ce que** l'élément conducteur (6) se compose d'un matériau largement homogène et est électriquement conducteur de façon invariante dans le temps.

6. Système de transmission de messages selon l'une des revendications précédentes, **caractérisé en ce que** l'élément conducteur (6) présente une impédance électrique par rapport au potentiel de terre.

7. Système de transmission de messages selon l'une des revendications précédentes, **caractérisé en ce que** le champ électrique proche est modulé avec un message à transmettre.

8. Système de transmission de messages selon la revendication 7, **caractérisé en ce que** la fréquence porteuse est comprise à peu près entre 5 MHz et 50 MHz.

9. Émetteur pour émettre des messages, lequel comporte au moins une alimentation en énergie (8), un modulateur (10), une capacité de couplage (C_{B}) à la terre et un élément de couplage (2) par lequel le message à transmettre est couplé, par un champ pour l'essentiel électrique proche, dans un élément conducteur (6) électrique non symétrique qui utilise le potentiel de terre comme conducteur de retour pour la transmission de messages.

10. Récepteur pour recevoir des messages, lequel comporte une alimentation en énergie (8), un démodulateur (10), une capacité de couplage (C_{B}) à la terre et au moins un élément de couplage (5) par lequel le message à transmettre via un élément conducteur (6) électrique non symétrique qui utilise le potentiel de terre comme conducteur de retour pour la transmission de messages est découplé de l'élément conducteur (6) par un champ pour l'essentiel électrique proche.

11. Utilisation du système de transmission de messages selon la revendication 1 dans un système de bus d'un bâtiment, **caractérisé en ce que** l'élément conducteur non symétrique est une partie d'un système de corps chauffants.
